# EUROPÄISCHE PATENTSCHRIFT

(11) **EP 3 890 518 B1**
(45) Veröffentlichungstag und Bekanntmachung des Hinweises auf die Patenterteilung: **25.02.2026**
(21) Anmeldenummer: 19816508.6
(22) Anmeldetag: 02.12.2019
(51) Int. Cl.: A24C 5/18, A24C 5/39

(54) **ZIGARETTENMASCHINE UND VERFAHREN ZUR HERSTELLUNG VON ZIGARETTEN**
CIGARETTE-MAKING MACHINE AND METHOD FOR PRODUCING CIGARETTES
CONFECTIONNEUSE DE CIGARETTES ET PROCÉDÉ DE FABRICATION DE CIGARETTES

(30) Priorität: 03.12.2018 CH 14852018
(43) Veröffentlichungstag der Anmeldung: 13.10.2021
(73) Patentinhaber: Heimat Manufaktur AG, 9323 Steinach (CH)
(72) Erfinder: KOCH, Roger, 9400 Rorschach (CH)
(74) Vertreter: Swisspat Riederer Hasler Patentanwälte AG
(86) Internationale Anmeldenummer: PCT/CH2019/050027
(87) Internationale Veröffentlichungsnummer: WO 2020/113348

(56) Entgegenhaltungen:
- EP-A1- 2 883 462
- EP-A1- 3 020 288
- DE-A1- 102004 017 618
- DE-A1- 102006 027 597
- DE-A1- 3 821 677
- DE-U1- 202013 100 833
- US-A- 4 239 103
- US-B1- 6 273 093

## Beschreibung

### Gebiet der Erfindung

Die Erfindung betrifft ein Verfahren zur Herstellung von Zigaretten gemäss Oberbegriff des Anspruchs 1 und eine Zigarettenmaschine zur Umsetzung des Verfahrens gemäss Oberbegriff des Anspruchs 10.

### Stand der Technik

Aus dem Stand der Technik sind seit mehr als 100 Jahren Zigaretten-Strangmaschinen bekannt. Eine Zigaretten-Strangmaschine besteht aus einer Verteilereinheit in der vibrierende Schachtwände und/oder eine Walze mit Stahlstiften für eine gleichmäßige Verteilung des durch ein Förderband ankommenden Schnitttabaks innerhalb der Verteilerbox sorgen. Am unteren Ende der Box wird der gemischte Tabak fein und gleichmäßig auseinander gezogen. Dies erfolgt mittels eines luftdurchlässigen, textilen Förderbandes (dem sogenannten Saugstrangförderer), das den Tabak aus der Verteilerbox gleichmäßig fördert. Damit der Tabak auf dem Band bleibt, wirkt unterhalb des luftdurchlässigen Förderbandes ein Vakuum, so dass der Tabak auf das Band angesaugt und damit quasi fixiert wird. Am Ende des Saugstrangförderers befindet sich eine Überschußabnahmevorrichtung, bestehend aus zwei umlaufenden Trimmerscheiben, welche überschüssige Tabakfasern vom Tabakstrang entfernen. Je nach Stellung der Trimmerscheiben zum Förderband, wird eine mehr oder weniger große Tabakmenge abgenommen. Der Tabaküberschuss fällt in einen Schacht und wird der Verteilereinheit wieder zugeführt.

Der Tabakstrang wird dann vom Saugstrangförderer auf ein kontinuierlich laufendes Formatband ablegt, das den Tabakstrang rund formt. Danach läuft der Tabakstrang durch ein verengtes Mundstück, wo sich von außen das Zigarettenpapier um den Tabakstrang legt. Diese Station wird auch Formatkammer genannt. An dieser Stelle befindet sich ebenfalls eine Leimdüse mit Lebensmittelleim, welche das Zigarettenpapier an einem Rand kontinuierlich anleimt. Eine kurze Heizstrecke sorgt anschließend dafür, dass der Leim abbinden kann. Zudem wird die Leimnaht dabei geglättet. So entsteht ein endloser, umhüllter und zugeklebter Tabakstrang.

In einem alternativen Herstellverfahren zur Herstellung einer Zigarette wird der geschnittene Tabak in einem Feeder vereinzelt. Der vereinzelte Tabak fällt am unteren Ende des Tabaksichters auf ein Förderband. Der überschüssige Tabakstaub wird in einer Überschussabnahmevorrichtung abgenommen, bevorzugt abgesaugt. Der Tabak wird auf dem Förderband von einem Dosierrad zu einem Strang geformt. Der Tabakstrang wird mit mindestens einem Pressrad komprimiert. Dann wird der Tabakstrang durch ein verengtes Mundstück geführt und der Tabakstrang wird an dem Mundstück mit Zigarettenpapier umwickelt. Das Zigarettenpapier wird entlang der Längsrichtung des Stranges verleimt.

Sollen Zigaretten hergestellt werden, welche anstatt oder zusätzlich zum Tabak eine weitere rauchbare Substanz enthalten, so können sich Probleme mit der Verarbeitung dieser Zusatzsubstanz ergeben.

In der DE 10 2006 027 597 A1 ist eine Betriebsweise einer Strangmaschine der Tabak verarbeitenden Industrie beschrieben. Tabak wird mittels Saugluft durch einen Saugschacht an ein Saugband gesaugt. An der Kanalwand des Saugschachtes ist eine Düse angeordnet über die ein Fluid dem Tabak zudosiert wird.

Die DE 10 2004 017 618 A1 beschreibt ein Verfahren zur Herstellung eines rauchbaren Artikels. Einem Saugstrangförderer wird neben dem Tabak ein Extrudatstrang aufgegeben. Das Extrudat wird aus einer Basiskomponente und einem diskontinuierlich zudosiertem Zusatzstoff gebildet. Dadurch befindet sich an der vorderen Seite des rauchbaren Artikels, an welcher der Artikel entzündet wird, kein Zusatzstoff.

In der DE 38 21 677 A1 ist ein Verfahren zur Herstellung eines aromatisierten stangförmigen Rauchmaterials beschrieben. Damit die Flüssigkeit, welche den Aromastoff, beispielsweise Menthol, trägt, keine Flecken auf dem Zigarettenpapier bildet, wird die Flüssigkeit zwischen einer ersten und zweiten Hälfte des Tabakstranges aufgegeben.

Aus der EP 2 883 462 A1 ist ein Verfahren zur Beschickung einer Strangmaschine mit einem durch Zusatzstoffe angereicherten Produktstrom aus Fasermaterial bekannt. Das Fasermaterial besteht aus Tabakfasern und/oder Filtermaterialfasern. Durch Zuführen des Produktstromes direkt in den Sichterkanal wird das Fasermaterial gleichmässig in dem Produktstrom verteilt.

In der EP 3 020 288 A1 ist ebenfalls ein Verfahren zum Bilden eines Tabakstranges offenbart. Der mit der Saugluft zwangsläufig abgesaugte Kurztabak wird von Feinstaub in einem Abscheider befreit und wird den Tabakfasern wieder zugeführt.

### Aufgabe der Erfindung

Aus den Nachteilen des beschriebenen Stands der Technik resultiert die die vorliegende Erfindung initiierende Aufgabe, ein Verfahren zur Herstellung von Zigaretten vorzuschlagen, welches es ermöglicht, dass Zigaretten herstellbar sind, welche neben dem Tabak eine rauchbare Zusatzsubstanz enthalten, ohne dass die Zusatzsubstanz das Herstellverfahren, insbesondere die Produktionsgeschwindigkeit, beeinträchtigt oder eine ungleichmässige Verteilung der Zusatzsubstanz in den Zigaretten vorhanden wäre.

### Beschreibung

Die Lösung der gestellten Aufgabe gelingt bei einem Verfahren zur Herstellung von Zigaretten durch die im kennzeichnenden Abschnitt des Patentanspruchs 1 angeführten Merkmale. Weiterbildungen und/oder vorteilhafte Ausführungsvarianten sind Gegenstand der abhängigen Patentansprüche.

Das Verfahren zeichnet sich dadurch aus, dass dem mit Tabak versetzten Saugstrom eine rauchbare Zusatzsubstanz, welche die Zigarettenmaschine verschmutzende Harze enthält, zudosiert wird und der Tabakstrang, bestehend aus Tabak und der Zusatzsubstanz, an der Unterseite des ersten Förderbandes geformt wird. Dem Saugstrom kann eine beliebige Menge an Zusatzsubstanz zugesetzt werden, wodurch die Zudosierung keine limitierende Grösse für die Produktionsgeschwindigkeit darstellt. Selbst wenn die Produktionsgeschwindigkeit der Zigaretten jener entspricht, welche bei Zigaretten ohne Zusatzsubstanz üblich ist, kann eine ausreichende Menge an Zusatzsubstanz dem mit Tabak versetzten Saugstrom zudosiert werden.

Ein weiterer Vorteil des Verfahrens ist, dass in der Zigarettenmaschine Zusatzstoffe verarbeitet werden können, welche die Zigarettenmaschine üblicherweise so stark verschmutzen würden, dass sie nur schwer oder gar nicht verarbeitbar sind, indem die Zudosierung der Zusatzsubstanz in den Saugstrom aufgegeben wird und dadurch mögdie gesamte Zigarettenmaschine wird verunreinigt. Insbesondere das Förderband und die Überschussabnahmevorrichtung werden verschmutzt und können ihre Funktion nicht mehr zufriedenstellend erfüllen.

Ein weiterer Vorteil des Verfahrens ist, dass dem Saugstrom eine beliebige Menge an Zusatzsubstanz zugesetzt werden kann, wodurch die Zudosierung keine limitierende Grösse für die Produktionsgeschwindigkeit darstellt. Selbst wenn die Produktionsgeschwindigkeit der Zigaretten jener entspricht, welche bei Zigaretten ohne Zusatzsubstanz üblich ist, kann eine ausreichende Menge an Zusatzsubstanz dem mit Tabak versetzten Saugstrom zudosiert werden.

Die Erfindung zeichnet sich bevorzugt dadurch aus, dass die rauchbare Zusatzsubstanz im Wesentlichen in der Mitte der Breite des Saugstromes dem Saugstrom zudosiert wird. In überraschender Weise führt dieser Ort der Zugabe der Zusatzsubstanz zu einer gleichmässigen Verteilung der Zusatzsubstanz in dem an dem ersten Förderband ausgebildeten Tabakstrang. Diese Tatsache widerspricht der Erwartung, dass sich die Zusatzsubstanz an der Unterseite des ersten Förderbandes anreichert und daher in dem Tabakstrang inhomogen verteilt vorliegt.

In einer bevorzugten Ausführungsform der Erfindung wird die rauchbare Zusatzsubstanz mit einer Schwingfördervorrichtung dem Saugstrom zudosiert. Dies ermöglicht eine genaue Zudosierung der Zusatzsubstanz indem die passende Schwingfrequenz eingestellt wird. Zudem ist die Schwingfördervorrichung robust und benötigt wenig Wartungsaufwand.

In einer besonders bevorzugten Ausführungsform der Erfindung umfasst die Schwingfördervorrichtung einen Spiralförderer mit einem spiralförmigen Spiraltopf, welcher Spiraltopf in Schwingung versetzt wird, wodurch die Zusatzsubstanz in Richtung des Saugstroms gefördert wird. Üblicherweise wird ein Spiralförderer dazu benutzt, Einzelteile zu vereinzeln und in eine bestimmte Lage am Ausgang des Spiraltopfes zu bringen. Dadurch können die Einzelteile von einem Greifer erfasst werden. In überraschender Weise wurde gefunden, dass der Spiralförderer die Zusatzsubstanz beliebig rasch und gleichmässig fördert. Dadurch ermöglicht der Spiralförderer, dass kein Engpass an zudosierter Zusatzsubstanz entsteht, auch wenn die Förderbandgeschwindigkeit der Zigarettenmaschine der Förderbandgeschwindigkeit einer Zigarettenmaschine entspricht, welche Zigaretten ohne einen zugesetzten Zusatzstoff produziert. Mit dem Spiralförderer lassen sich auch Verteilungsraten von beispielsweise 20 Gewichtsprozent Zusatzsubstanz zu 80 Gewichtsprozent geschnittener Tabak realisieren.

Als zweckdienlich hat es sich erwiesen, wenn der Spiralförderer von einem Vibrationsbunker in Abhängigkeit von der Füllstandshöhe der Zusatzsubstanz in dem Spiraltopf befüllt wird. Dadurch läuft die Zudosierung der Zusatzsubstanz in den Saugstrom vollautomatisch ab. Wenn der Vibrationsbunker leer ist, kann er jederzeit mit Zusatzsubstanz während des Betriebes nachgefüllt werden.

In einer weiteren bevorzugten Ausführungsform der Erfindung wird der Spiralförderer von einem Vibrationsbunker in Abhängigkeit von der Füllstandshöhe der Zusatzsubstanz in dem Spiraltopf befüllt. Dadurch ist der Spiraltopf immer optimal befüllt, damit eine ausreichende Menge an Zusatzsubstanz mit grosser Genauigkeit dem Saugstrom zudosiert werden kann.

Die Erfindung zeichnet sich auch bevorzugt dadurch aus, dass die Zusatzsubstanz feiner zerkleinert wird als der Tabak. Dieser Zerkleinerungsgrad erleichtert es, dass sich die Zusatzsubstanz gleichmässig in dem Saugstrom und in dem Tabakstrang verteilt. Auch während des Transports der Zigaretten in die Verkaufsstellen treten Vibrationen auf, welche die Zusatzsubstanz in dem Tabakstrang zusätzlich gleichmässig verteilen.

In einer weiteren besonders bevorzugten Ausführungsform der Erfindung werden als Zusatzsubstanz zerkleinerte Bestandteilen der Hanfpflanze verwendet. Obwohl Hanf Harz und Öl enthält, welches die Teile der Zigarettenmaschine, die es berührt, verklebt, lässt sich Hanf als Zusatzsubstanz verarbeiten. Gemäss dem Verfahren wird der Hanf dem Saugstrom zugesetzt, um möglichst wenig Maschinenteile zu verkleben. Denkbar sind auch andere rauchbare Zusatzsubstanzen, wie Kräuter oder Nelken, welche dem Zigarettenrauch ein bestimmtes Aroma verleihen.

Zweckmässigerweise werden die Bestandteile der Hanfpflanze zur Zerkleinerung geschnitten. Dadurch lässt sich der Zerkleinerungsgrad genau einstellen, insbesondere lässt sich der Zerkleinerungsgrad der Hanfpflanze so einstellen, dass sich die Hanfteile gut in dem Saugstrom und in dem Tabakstrang verteilen und sich homogen mit dem Tabakstrang verbinden.

Ein weiterer Aspekt der Erfindung betrifft eine Zigarettenmaschine zur Umsetzung des oben beschriebenen Verfahrens, umfassend eine Dosiervorrichtung mit einer Zuleitung, welche Zuleitung unterhalb der Unterseite des ersten Förderbandes mündet und mit welcher Dosiervorrichtung eine rauchbare Zusatzsubstanz in den mit vereinzeltem Tabak versetzten Saugstrom zudosierbar ist. Die Dosiervorrichtung ist eine Schwingfördervorrichtung. Die Schwingfördervorrichtung ist robust und benötigt wenig Wartungsaufwand. Zudem lässt sich die Fördermenge der Zusatzsubstanz genau dosieren. Die Positionierung der Zuleitung, um die Zusatzsubstanz in den Saugstrom zugeben zu können, ermöglicht es, dass auch bei hohen Produktionsgeschwindigkeiten und dementsprechend grossen Zigarettenstückzahlen eine ausreichende Menge an Zusatzsubstanz zudosiert werden kann. Auch wird durch die Positionierung der Zuleitung, damit die Zusatzsubstanz in den Saugstrom gelangt, erreicht, dass möglichst wenige Teile der Zigarettenmaschine mit der Zusatzsubstanz in Berührung kommen. Dadurch lässt sich eine Verschmutzung von Maschinenteilen mit der Zusatzsubstanz zuverlässig verhindern.

Erfindungsgemäss umfasst die Schwingfördervorrichtung einen Vibrationsbunker, mit welchem der Spiraltopf in Abhängigkeit von der Füllstandhöhe der Zusatzsubstanz in dem Spiraltopf befüllbar ist. Dadurch ist der Spiraltopf immer automatisch optimal befüllt, um die Zusatzsubstanz in ausreichender und genauer Menge in den Saugstrom fördern zu können.

In einer besonders bevorzugten Ausführungsform der Erfindung ist die Zuleitung im Wesentlichen in der Mitte der Länge des Saugbalkens angeordnet. Dadurch lässt sich die Zusatzsubstanz in dem an der Unterseite des ersten Förderbandes gebildeten Tabakstrangs in überraschender Weise gleichmässig verteilen.

In einer besonders bevorzugten Ausführungsform der Erfindung umfasst die Schwingfördervorrichtung einen Spiralförderer mit einem spiralförmigen Spiraltopf, welcher Spiraltopf in Schwingung versetzt wird, wodurch die Zusatzsubstanz in Richtung des Saugstroms förderbar ist. Der Spiralförderer, welcher üblicherweise für die Vereinzelung und Positionierung von Einzelteilen zur Anwendung kommt, ermöglicht es in überraschender Weise eine ausreichend grosse und genau dosierte Menge an Zusatzsubstanz in den Saugstrom aufzugeben.

Zweckmässigerweise umfasst die Schwingfördervorrichtung einen Laser, mit welchem die Füllstandhöhe in dem Spiraltopf messbar ist. Der Laser misst kontinuierlich seinen Abstand zu dem an einer Stelle des Spiraltopfes vorhandenen Zusatzsubstanz. Sobald die Zusatzsubstanz einen ersten vordefinierten Abstand unterschreitet wird der Vibrationsbunker automatisch in Betrieb genommen und fördert solange Zusatzsubstanz nach, bis ein zweiter vordefinierter Abstand zwischen der Zusatzsubstanz und dem Laser erreicht ist, welcher kleiner als der erste vordefinierte Abstand ist.

Weitere Vorteile und Merkmale ergeben sich aus der nachfolgenden Beschreibung eines Ausführungsbeispiels der Erfindung unter Bezugnahme auf die schematischen Darstellungen. Es zeigt in nicht massstabsgetreuer Darstellung:

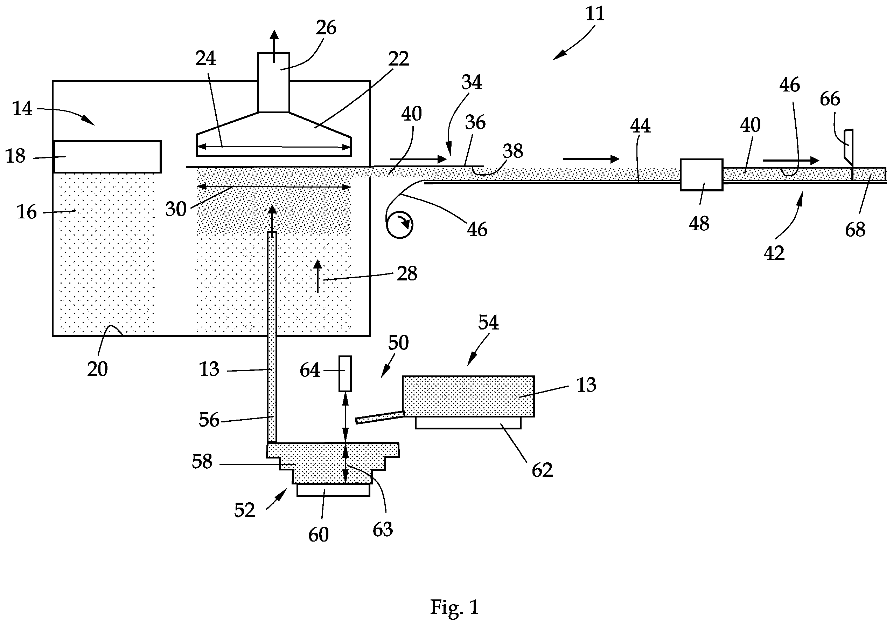

- Figur 1:: eine Prinzipskizze einer Zigarettenmaschine zur Erläuterung des Verfahrens zur Herstellung von Zigaretten.

In der Figur 1 ist eine Zigarettenmaschine gezeigt, welche gesamthaft mit dem Bezugszeichen 11 bezeichnet ist. Die Zigarettenmaschine kann auch als Zigaretten-Strangmaschine bezeichnet werden. Das Verfahren ermöglicht es, Zigaretten auf einfache Weise herzustellen, welche neben Tabak eine rauchbare Zusatzsubstanz 13 enthalten. Auch ermöglicht es das neue Verfahren, dass die hergestellte Zigarettenstückzahl von Zigaretten mit Zusatzsubstanz 13 pro Minute im Vergleich zu Verfahren gemäss dem Stand der Technik um das 10 fache erhöht ist.

Die Zigarettenmaschine 11 umfasst einen Tabaksichter 14, welcher geschnittenen Tabak 16 vereinzelt und auch als "Hopper" bezeichnet wird. Der geschnittene Tabak 16 wird Unterhalb des Saugbalkens 22 ist ein erstes Förderband 34 mit einer Oberseite 36 und einer Unterseite 38 angeordnet. Das erste Förderband 34 ist luftdurchlässig, verhindert jedoch grösstenteils den Durchgang des Tabaks 16 in Richtung des Saugbalkens. Bevorzugt ist das erste Förderband 34 ein Gewebeband, welches luftdurchlässig und tabakundurchlässig ist. Der angesaugte Tabak 16 wird an der Unterseite 38 zurückgehalten und wird an der Unterseite 38 zu einem Tabakstrang 40 geformt, indem der Tabakstrang 40 an der Unterseite 38 durch den Saugstrom 28 komprimiert wird.

Nachdem der Tabakstrang 40 an der Unterseite 38 des ersten Förderbandes ausgebildet wurde, wird er an eine Oberseite 44 eines zweiten Förderbandes 42 übergeben. Bevor der Tabakstrang 40 an das zweite Förderband 42 übergeben wird, wird auf der Oberseite 44 des zweiten Förderbandes 42 ein Zigarettenpapierband 46 angeordnet bzw. abgerollt, welches sich auf der Oberseite 44 mit dem zweiten Förderband 42 mitbewegt. Der Tabakstrang 40 kommt daher auf dem Zigarettenpapierband 46 zu liegen.

Der Tabakstrang 40 wird durch ein Mundstück 48 geführt. Das Mundstück 48 umwickelt mit einer Formschulter automatisch den Tabakstrang 40 mit dem Zigarettenpapierband 46, wenn der Tabakstrang 40 und das Zigarettenpapierband 46 durch das Mundstück gezogen bzw. geführt werden. Gleichzeitig wird das Zigarettenpapierband 46 entlang seiner Längsseiten verleimt.

Dem mit Tabak 16 versetzten Saugstrom 28 wird die rauchbare Zusatzsubstanz 13 zudosiert und der Tabakstrang 40 wird an der Unterseite 38 des ersten Förderbandes 34 aus dem Tabak 16 und der Zusatzsubstanz 13 geformt. Die Zusatzsubstanz 13 besteht bevorzugt aus zerkleinerten Pflanzenteilen der Hanfpflanze. Beispielsweise können das die Blüten der Hanfpflanze sein. Bevorzugt ist der Zerkleinerungsgrad der Zusatzsubstanz 13 grösser als der Zerkleinerungsgrad des Tabaks 16. Die Zusatzsubstanz 13 ist also feiner zerkleinert als der Tabak 16.

Die Zudosierung der Zusatzsubstanz 13 in den Saugstrom 28 führt zu einigen überraschenden Vorteilen: Die Zusatzsubstanz 13 verteilt sich gleichmässig in dem gebildeten Tabakstrang 40 und in dem Tabakstrang 40 bilden sich keine Stellen mit konzentrierter Zusatzsubstanz 13. Wird die Produktionsgeschwindigkeit bzw. die Förderbandgeschwindigkeit erhöht, so bildet die Zudosierungsgeschwindigkeit der Zusatzsubstanz 13 keine limitierende Grösse. Die Zudosierungsgeschwindigkeit in den Saugstrom 28 kann daher beliebig erhöht werden. Auch wird durch die Zudosierung der Zusatzsubstanz 13 in den Saugstrom 28 der Kontakt der Zusatzsubstanz mit Maschinenteilen minimiert bzw. ist gar nicht vorhanden. Dies ist insbesondere dann von Bedeutung, wenn die Zusatzsubstanz 13, wie Hanf, Harz enthält, denn das erfinderische Verfahren verhindert es, dass Maschinenteile verharzen und ständig eingefettet oder gereinigt werden müssen.

Entgegen der Erwartung, dass sich die Zusatzsubstanz 13, welche feiner zerkleinert ist als der Tabak, an der Oberseite 36 anreichert und daher inhomogen verteilt ist, verteilt sich die Zusatzsubstanz 13 gleichmässig in dem Tabakstrang 40. Insbesondere, wenn Zusatzsubstanz im Wesentlichen in der Mitte der Breite 30 des Saugstromes 28 zu dem Saugstrom 28 zudosiert wird, kann eine besonders homogene Verteilung der Zusatzsubstanz 13 in dem Tabakstrang 40 erreicht werden.

Die Zusatzsubstanz 13 wird von einer Schwingfördervorrichtung dem Saugstrom 28 zudosiert, welche Schwingfördervorrichtung gesamthaft mit dem Bezugszeichen 50 bezeichnet ist. Die Schwingfördervorrichtung 50 umfasst einen Spiralförderer 52, einen Vibrationsbunker 54 und eine Zuleitung in Gestalt einer Förderrinne 56.

Der Spiralförderer 52 ist mit einem spiralförmigen Spiraltopf 58 ausgestattet, welcher durch einen ersten Schwingantrieb 60 in Vibration versetzt wird. In dem Spiraltopf 58 wird die Zusatzsubstanz 13 spiralförmig von innen und unten nach oben und aussen gefördert. Üblicherweise wird der Spiralförderer 52 zur Ausrichtung und Vereinzelung von Einzelteilen benutzt, sodass diese am Ausgang des Spiraltopfes 58 von einem Greifer erfasst werden können. In überraschender Weise wurde gefunden, dass der Spiralförderer 52 die Zusatzsubstanz 13 beliebig rasch und gleichmässig fördert. Dadurch ermöglicht der Spiralförderer 52, dass kein Engpass an zudosierter Zusatzsubstanz 13 entsteht, auch wenn die Förderbandgeschwindigkeit der Zigarettenmaschine 11 beispielsweise zwischen 5 m/ s und 7 m/s beträgt. Ferner ist die Dosiermenge des Spiralförderers 52 sehr genau. Der vibrierende Spiraltopf 58 ist fest mit der Förderrinne 56 verbunden, wodurch die Förderrinne 56 ebenfalls vibriert und die Zusatzsubstanz 13 bis zum offenen Ende der Förderrinne 56 transportiert wird und direkt in den Saugstrom 28 aufgegeben wird.

Der Vibrationsbunker 54 ist durch einen zweiten Schwingantrieb 62 in Vibration versetzt. In dem Vibrationsbunker 54 ist die Zusatzsubstanz 13 bevorratet und wird in die Mitte des Spiraltopfes 58 gefördert. Die Fördermenge der Zusatzsubstanz 13 lässt sich durch den ersten und zweiten Schwingantrieb 60,62 an die Fördermenge des Tabaks 16 bzw. die Fördergeschwindigkeit des Tabakstranges 40 anpassen. Dadurch lässt sich ein Mengenverhältnis zwischen dem Tabak 16 und der Zusatzsubstanz 13 genau einstellen. Die Schwingantriebe 60,62 können auch in Abhängigkeit zu der Fördermenge des Tabaks 16 stehen, damit die Mengenverhältnisse zwischen dem Tabak 16 und der Zusatzsubstanz 13 konstant bleiben, wenn die Fördermenge des Tabaks in der Zigarettenmaschine 11 geändert wird.

Die Füllstandhöhe 63 der Zusatzsubstanz 13 in dem Spiraltopf 58 kann mit einem Abstandsmesser 64, welcher bevorzugt ein Laser ist, gemessen werden. Abhängig von der gemessenen Füllstandhöhe 63 wird der Vibrationsbunker 54 solange aktiviert, bis die Füllstandhöhe 63 einen vordefinierten Wert erreicht hat.

Der mit dem Zigarettenpapierband 46 umwickelte Tabakstrang 40 wird von einem Messer 66 in Zigaretten 68 geschnitten.

Das beschriebene Verfahren hat den Vorteil, dass eine ausreichende Menge der Zusatzsubstanz 13 sehr genau dem Tabak 16 zudosiert werden kann, auch wenn die Fördergeschwindigkeit des Tabakstranges 40 hoch ist bzw. die Anzahl an produzierten Zigaretten 68pro Minute den Stückzahlen von Zigarettenmaschinen entspricht, welche Zigaretten ohne eine zudosierte Zusatzsubstanz 13 herstellen.

Ein weiterer Vorteil ist, dass das Verfahren es ermöglicht Zigaretten herzustellen, welche mit einer Zusatzsubstanz 13 versetzt sind, und gleichzeitig die Verschmutzung der Zigarettenmaschine 11 mit der Zusatzsubstanz 13 stark reduziert. Dadurch können auch harzhaltige Zusatzsubstanzen, beispielsweise zerkleinerte Bestandteile der Hanfpflanze, verwendet werden, ohne dass das Harz die Zigarettenmaschine 11 verklebt.

### Legende:

- 11: Zigarettenmaschine, Zigaretten-Strangmaschine
- 13: Zusatzsubstanz
- 14: Tabaksichter
- 16: Geschnittener Tabak
- 18: Rolle
- 20: Boden des Tabaksichters
- 22: Saugbalken
- 24: Länge des Saugbalkens
- 26: Luftabsaugung
- 28: Saugstrom
- 30: Breite des Saugstromes
- 34: Erstes Förderband
- 36: Oberseite des ersten Förderbandes
- 38: Unterseite des ersten Förderbandes
- 40: Tabakstrang
- 42: Zweites Förderband
- 44: Oberseite des zweiten Förderbandes
- 46: Zigarettenpapierband
- 48: Mundstück
- 50: Schwingfördervorrichtung, Dosiervorrichtung
- 52: Spiralförderer
- 54: Vibrationsbunker
- 56: Förderrinne, Zuleitung
- 58: Spiraltopf
- 60: Erster Schwingantrieb
- 62: Zweiter Schwingantrieb
- 63: Füllstandhöhe
- 64: Abstandsmesser
- 66: Messer
- 68: Zigaretten

## Patentansprüche

1. Verfahren zur Herstellung von Zigaretten (68) in einer Zigarettenmaschine (11), wobei
- geschnittener Tabak (16) in einem Tabaksichter (14) vereinzelt wird,
- der vereinzelte Tabak (16) am Boden des Tabaksichters (14) gesammelt wird,
- der vereinzelte Tabak (16) in einem Saugstrom (28) an eine Unterseite (38) eines ersten luftdurchlässigen Förderbandes (34) gesaugt wird, indem oberhalb einer Oberseite (36) des ersten Förderbandes (34) ein Saugbalken (22) angeordnet wird, welcher an eine Luftabsaugung (26) angeschlossen ist,
- eine Breite (30) des Saugstromes durch eine Länge (24) des Saugbalkens (22) definiert wird, wobei auf der Länge (24) des Saugbalkens (22) Luft mit Tabak (16) angesaugt wird,
- der Tabak (16) an der Unterseite (38) des ersten Förderbandes (34) zu einem Tabakstrang (40) geformt wird, indem er an der Unterseite (38) des ersten Förderbandes (34) durch den Saugstrom (28) komprimiert wird,
- der Tabakstrang (40) von der Unterseite (38) des ersten Förderbandes (34) auf eine Oberseite (44) eines zweiten Förderbandes (42) übergeben wird, auf welcher Oberseite (44) ein Zigarettenpapierband (46) angeordnet ist,
- der Tabakstrang (40) auf der Oberseite (44) des zweiten Förderbandes (42) durch ein verengtes Mundstück (48) geführt wird,
- der Tabakstrang (40) an dem Mundstück (48) mit dem Zigarettenpapierband (46) umwickelt wird,
- das Zigarettenpapierband (46) entlang der Längsrichtung des Stranges (40) verleimt wird und
- der Tabakstrang (40) in Zigaretten (68) geschnitten wird,
**dadurch gekennzeichnet,**
**dass** dem mit Tabak (16) versetzten Saugstrom (28) eine rauchbare Zusatzsubstanz (13), welche die Zigarettenmaschine (11) verschmutzende Harze enthält, zudosiert wird und der Tabakstrang (40) bestehend aus dem Tabak (16) und der Zusatzsubstanz (13) an der Unterseite (28) des ersten Förderbandes (34) geformt wird.

2. Verfahren nach Anspruch 1, **dadurch gekennzeichnet, dass** die rauchbare Zusatzsubstanz (13) im Wesentlichen in der Mitte der Breite (30) des Saugstromes (28) dem Saugstrom (28) zudosiert wird.

3. Verfahren nach einem der Ansprüche 1 oder 2, **dadurch gekennzeichnet, dass** die rauchbare Zusatzsubstanz (13) mit einer Schwingfördervorrichtung (50) dem Saugstrom (20) zudosiert wird.

4. Verfahren nach Anspruch 3, **dadurch gekennzeichnet, dass** die Schwingfördervorrichtung (50) einen Spiralförderer (52) mit einem spiralförmigen Spiraltopf (58) umfasst, welcher Spiraltopf (58) in Schwingung versetzt wird, wodurch die Zusatzsubstanz (13) in Richtung des Saugstroms (28) gefördert wird.

5. Verfahren nach Anspruch 4, **dadurch gekennzeichnet, dass** der Spiralförderer (52) von einem Vibrationsbunker (54) in Abhängigkeit von der Füllstandhöhe (63) der Zusatzsubstanz (13) in dem Spiraltopf (58) befüllt wird.

6. Verfahren nach Anspruch 3 bis 5, **dadurch gekennzeichnet, dass** die Fördermenge der Zusatzsubstanz (13), welche mit der Schwingfördervorrichtung (50) zudosiert wird, abhängig von Fördermenge des Tabaks (16) in dem Saugstrom (28) ist.

7. Verfahren nach einem der vorangehenden Ansprüche, **dadurch gekennzeichnet, dass** die Zusatzsubstanz (13) feiner zerkleinert wird als der Tabak (16).

8. Verfahren nach einem der vorangehenden Ansprüche, **dadurch gekennzeichnet, dass** als Zusatzsubstanz (13) zerkleinerte Bestandteile der Hanfpflanze verwendet werden.

9. Verfahren nach Anspruch 8, **dadurch gekennzeichnet, dass** die Bestandteile der Hanfpflanze zur Zerkleinerung geschnitten werden.

10. Zigarettenmaschine (11) zur Umsetzung eines Verfahrens gemäss einem der vorangehenden Ansprüche umfassend
- einen Tabaksichter (14), in dem geschnittener Tabak (16) vereinzelt wird,
- einen Saugbalken (22), welcher an eine Luftabsaugung (26) angeschlossen ist und mit welchem entlang der Länge (24) des Saugbalkens (22) ein Saugstrom (28) mit dem vereinzelten Tabak (16) ansaugbar ist,
- ein erstes luftdurchlässiges Förderband (34) mit einer Oberseite (36) und einer Unterseite (38), wobei die Oberseite (38) dem Saugbalken (22) zugewandt ist und der Tabak (16) an der Unterseite (38) des ersten Förderbandes (34) zu einem Tabakstrang (40) formbar ist,
- ein zweites Förderband (42), auf dessen Oberseite (44) ein Zigarettenpapierband (46) anordenbar ist und auf dessen Oberseite (44) der Tabakstrang (40) von dem ersten Förderband (34) übergeben werden kann
- ein Mundstück (48) an dem der Tabakstrang (20) mit Zigarettenpapierband (46) umwickelbar ist,
eine Dosiervorrichtung (50) mit einer Zuleitung (56), welche Zuleitung (56) unterhalb der Unterseite (38) des ersten Förderbandes (34) mündet und mit welcher Dosiervorrichtung (50) eine rauchbare Zusatzsubstanz (13) in den mit vereinzeltem Tabak (16) versetzten Saugstrom (28) zudosierbar ist, wobei die Dosiervorrichtung eine Schwingfördervorrichtung (50) ist.
**dadurch gekennzeichnet,**
**dass** die Schwingfördervorrichtung (50) einen Vibrationsbunker (54) umfasst, mit welchem ein Spiraltopf (58) in Abhängigkeit von der Füllstandhöhe (63) der Zusatzsubstanz (13) in dem Spiraltopf (58) befüllbar ist.

11. Zigarettenmaschine nach Anspruch 10, **dadurch gekennzeichnet, dass** die Zuleitung (56) im Wesentlichen in der Mitte der Länge (24) des Saugbalkens (22) angeordnet ist.

12. Zigarettenmaschine nach Anspruch 10 oder 11, **dadurch gekennzeichnet, dass** die Schwingfördervorrichtung (50) einen Spiralförderer (52) mit einem spiralförmigem Spiraltopf (58) umfasst, welcher Spiraltopf (58) in Schwingung versetzt wird, wodurch die Zusatzsubstanz (13) in Richtung des Saugstroms (28) förderbar ist.

13. Zigarettenmaschine nach einem der Ansprüche 10 bis 12, **dadurch gekennzeichnet, dass** die Schwingfördervorrichtung (50) einen Laser (64) umfasst, mit welchem die Füllstandhöhe (63) in dem Spiraltopf (58) messbar ist.

## Claims

1. A method of producing cigarettes (68) in a cigarette machine (11), wherein
- cut tobacco (16) is separated in a tobacco sifter (14),
- the separated tobacco (16) is collected at the bottom of the tobacco sifter (14),
- the separated tobacco (16) is sucked in a suction stream (28) to a lower side (38) of a first air-permeable conveyor belt (34) by arranging a suction bar (22) above an upper side (36) of the first conveyor belt (34), which suction bar (22) is connected to an air suction (26),
- a width (30) of the suction flow is defined by a length (24) of the suction beam (22), wherein air with tobacco (16) is sucked in along the length (24) of the suction beam (22),
- the tobacco (16) is formed into a tobacco rod (40) at the lower side (38) of the first conveyor belt (34) by being compressed at the lower side (38) of the first conveyor belt (34) by the suction current (28)
- the tobacco rod (40) is transferred from the lower side (38) of the first conveyor belt (34) to an upper side (44) of a second conveyor belt (42), on which upper side (44) a cigarette paper band (46) is arranged,
- the tobacco rod (40) is guided on the upper side (44) of the second conveyor belt (42) through a narrowed mouthpiece (48),
- the tobacco rod (40) is wrapped with the cigarette paper band (46) at the mouthpiece (48),
- the cigarette paper band (46) is glued along the longitudinal direction of the rod (40), and
- the tobacco rod (40) is cut into cigarettes (68),
**characterized in that**
a smokable additional substance (13), which contains resins which contaminate the cigarette machine (11), is metered into the suction stream (28) mixed with tobacco (16), and the tobacco rod (40), comprising the tobacco (16) and the additional substance (13), is formed on the lower side (28) of the first conveyor belt (34).

2. The method according to claim 1, **characterized in that** the smokable additive substance (13) is metered into the suction stream (28) essentially in the middle of the width (30) of the suction stream (28).

3. The method according to any one of claims 1 or 2, **characterized in that** the smokable additive substance (13) is metered into the suction stream (20) by means of an oscillating conveyor device (50).

4. The method according to claim 3, **characterized in that** the oscillating conveyor (50) comprises a spiral conveyor (52) with a spiral-shaped spiral pot (58), which spiral pot (58) is set into oscillation, whereby the additional substance (13) is conveyed in the direction of the suction flow (28).

5. The method according to claim 4, **characterized in that** the spiral conveyor (52) is filled by a vibrating hopper (54) dependent on the level (63) of the additive substance (13) in the spiral pot (58).

6. The method according to claims 3 to 5, **characterized in that** the delivery rate of the additional substance (13), which is metered in by the oscillating conveyor device (50) dependent on the delivery rate of the tobacco (16) in the suction stream (28).

7. The method according to any one of the preceding claims, **characterized in that** the additive substance (13) is more finely cut than the tobacco (16).

8. Method according to any one of the preceding claims, **characterized in that** finely cut constituents of the hemp plant are used as additive substance (13).

9. The method according to claim 8, **characterized in that** the components of the hemp plant are chopped for fine cutting.

10. A cigarette machine (11) for implementing a method according to any one of the preceding claims, comprising
- a tobacco sifter (14) in which cut tobacco (16) is separated,
- a suction beam (22) which is connected to an air extraction (26) and with which a suction flow (28) with the separated tobacco (16) can be sucked along the length (24) of the suction beam (22),
- a first air-permeable conveyor belt (34) having an upper side (36) and a lower side (38), the upper side (38) facing the suction beam (22) and the tobacco (16) being formable into a tobacco rod (40) on the lower side (38) of the first conveyor belt (34)
- a second conveyor belt (42), on the upper side (44) of which a cigarette paper band (46) can be arranged and on the upper side (44) of which the tobacco rod (40) can be transferred from the first conveyor belt (34),
- a mouthpiece (48) at which the tobacco rod (20) can be wrapped with cigarette paper tape (46), and
- a metering device (50) with a feed line (56), which feed line (56) opens out below the lower side (38) of the first conveyor belt (34) and with which metering device (50) a smokable additional substance (13) can be metered into the suction stream (28) mixed with separated tobacco (16), wherein the metering device is a vibrating conveyor device (50),
**further characterized**
**in that** the vibrating conveyor device (50) comprises a vibrating hopper (54) with which a spiral pot (58) can be filled as a function of the filling level (63) of the additional substance (13) in the spiral pot (58).

11. The cigarette machine according to claim 10, **characterized in that** the feed line (56) is arranged substantially in the middle of the length (24) of the suction bar (22).

12. The cigarette machine according to claim 10 or 11, **characterized in that** the oscillating conveyor (50) comprises a spiral conveyor (52) having a spiral pot (58), which spiral pot (58) is caused to oscillate, whereby the additive substance (13) is conveyable in the direction of the suction flow (28).

13. The cigarette machine according to any one of claims 10 to 12, **characterized in that** the oscillating conveyor (50) comprises a laser (64) with which the level (63) in the spiral pot (58) can be measured.

## Revendications

1. Procédé, destiné à fabriquer des cigarettes (68) dans une machine de fabrication (11) de cigarettes, lors duquel
- l'on désolidarise du tabac (16) coupé dans un séparateur (14) de tabac,
- l'on collecte le tabac (16) désolidarisé sur le fond inférieur du séparateur (14) de tabac,
- l'on aspire le tabac (16) désolidarisé dans un courant d'aspiration (28) sur une face inférieure (38) d'une première bande de convoyage (34) perméable à l'air, en ce qu'au-dessus d'une face supérieure (36) de la première bande de convoyage (34), l'on place une barre d'aspiration (22) sur laquelle est raccordée une aspiration d'air (26),
- l'on définit une largeur (30) du courant d'aspiration par une longueur (24) de la barre d'aspiration (22), sur la longueur (24) de la barre d'aspiration (22) étant aspiré de l'air avec du tabac (16),
- l'on façonne le tabac (16) sur la face inférieure (38) de la première bande de convoyage (34) en un tronçon (40) de tabac en le comprimant sur la face inférieure (38) de la première bande de convoyage (34) par le courant d'aspiration (28),
- l'on transfère le tronçon (40) de tabac de la face inférieure (38) de la première bande de convoyage (34) sur une face supérieure (44) d'une deuxième bande de convoyage (42), sur laquelle face supérieure (44) est placée une bande de papier (46) à cigarette,
- l'on guide le tronçon (40) de tabac sur la face supérieure (44) de la deuxième bande de convoyage (42) à travers un embout (48) rétréci,
- l'on enveloppe le tronçon (40) de tabac sur l'embout (48) avec la bande de papier (46) à cigarette,
- l'on colle la bande de papier (46) à cigarette le long de la direction longitudinale du tronçon (40) et
- l'on coupe le tronçon (40) de tabac en cigarettes (68),
**caractérisé**
**en ce que** l'on ajoute par dosage au courant d'aspiration (28) mélangé avec le tabac (16) une substance additionnelle (13) fumable, laquelle contient des résines qui encrassent la machine de fabrication (11) de cigarettes et l'on façonne sur la face inférieure (28) de la première bande de convoyage (34) le tronçon (40) de tabac consistant dans le tabac (16) et la substance additionnelle (13).

2. Procédé selon la revendication 1, **caractérisé en ce que** l'on ajoute par dosage au courant d'aspiration (28) la substance additionnelle (13) fumable sensiblement au centre de la largeur (30) du courant d'aspiration (28).

3. Procédé selon l'une quelconque des revendications 1 ou 2, **caractérisé en ce que** l'on ajoute par dosage au courant d'aspiration (20) la substance additionnelle (13) fumable à l'aide d'un dispositif de convoyage (50) vibratoire.

4. Procédé selon la revendication 3, **caractérisé en ce que** le dispositif de convoyage (50) vibratoire comprend un convoyeur hélicoïdal (52) doté d'un pot hélicoïdal (58) en forme d'hélice, lequel pot hélicoïdal (58) est amené en vibration, suite à quoi la substance additionnelle (13) est convoyée en direction du courant d'aspiration (28).

5. Procédé selon la revendication 4, **caractérisé en ce que** l'on remplit le convoyeur hélicoïdal (52) à l'aide d'une trémie vibrante (54), en fonction du niveau de remplissage (63) de la substance additionnelle (13) dans le pot hélicoïdal (58).

6. Procédé selon la revendication 3 à 5, **caractérisé en ce que** la quantité convoyée de la substance additionnelle (13), que l'on ajoute par dosage à l'aide du dispositif de convoyage (50) vibratoire dépend de la quantité convoyée du tabac (16) dans le courant d'aspiration (28).

7. Procédé selon l'une quelconque des revendications précédentes, **caractérisé en ce que** l'on broie la substance additionnelle (13) plus finement que le tabac (16).

8. Procédé selon l'une quelconque des revendications précédentes, **caractérisé en ce que** l'on utilise en tant que substance additionnelle (13) des composants broyés de la plante du chanvre.

9. Procédé selon la revendication 8, **caractérisé en ce que** pour les broyer, l'on coupe les composants de la plante du chanvre.

10. Machine de fabrication (11) de cigarettes, destinée à mettre en œuvre un procédé selon l'une quelconque des revendications précédentes, comprenant
- un séparateur (14) de tabac, dans lequel l'on désolidarise du tabac (16) coupé,
- une barre d'aspiration (22), laquelle est raccordée sur une aspiration d'air (26) et à l'aide de laquelle, le long de la longueur (24) de la barre d'aspiration (22), un courant d'aspiration (28) avec le tabac (16) désolidarisé est aspirable,
- une première bande de convoyage (34) perméable à l'air, dotée d'une face supérieure (36) et d'une face inférieure (38), la face supérieure (38) étant dirigée vers la barre d'aspiration (22) et le tabac (16) étant façonnable en un tronçon (40) de tabac sur la face inférieure (38) de la première bande de convoyage (34),
- une deuxième bande de convoyage (42), sur la face supérieure (44) de laquelle peut être placée une bande de papier (46) à cigarette et sur la face supérieure (44) de laquelle le tronçon (40) de tabac peut être transféré par la première bande de convoyage (34),
- un embout (48), sur lequel le tronçon (20) de tabac peut être enveloppé de bande de papier (46) à cigarette,
- un dispositif de dosage (50), doté d'une conduite d'alimentation (56), laquelle conduite d'alimentation (56) débouche en dessous de la face inférieure (38) de la première bande de convoyage (34) et avec lequel dispositif de dosage (50), une substance additionnelle (13) fumable peut être ajoutée par dosage dans le courant d'aspiration (28) mélangé avec le tabac (16) désolidarisé, le dispositif de dosage étant un dispositif de convoyage (50) vibratoire,
**caractérisée**
**en ce que** le dispositif de convoyage (50) vibratoire comprend une trémie vibrante (54), à l'aide de laquelle un pot hélicoïdal (58) est remplissable en fonction du niveau de remplissage (63) de la substance additionnelle (13) dans le pot hélicoïdal (58).

11. Machine de fabrication de cigarettes selon la revendication 10, **caractérisée en ce que** la conduite d'alimentation (56) est placée sensiblement au centre de la longueur (24) de la barre d'aspiration (22).

12. Machine de fabrication de cigarettes selon la revendication 10 ou 11, **caractérisée en ce que** le dispositif de convoyage (50) vibratoire comprend un convoyeur hélicoïdal (52), doté d'un pot hélicoïdal (58) en forme d'hélice, lequel pot hélicoïdal (58) est amené en vibration, suite à quoi la substance additionnelle (13) est convoyée en direction du courant d'aspiration (28).

13. Machine de fabrication de cigarettes selon l'une quelconque des revendications 10 à 12, **caractérisée en ce que** le dispositif de convoyage (50) vibratoire comprend un laser (64), à l'aide duquel le niveau de remplissage (63) dans le pot hélicoïdal (58) est mesurable.
